# EUROPÄISCHE PATENTSCHRIFT

(11) **EP 3 988 427 B1**
(45) Veröffentlichungstag und Bekanntmachung des Hinweises auf die Patenterteilung: **14.06.2023**
(21) Anmeldenummer: 21194584.5
(22) Anmeldetag: 02.09.2021
(51) Int. Cl.: B62D 5/04, B62D 6/00

(54) **STEER-BY-WIRE-LENKSYSTEM FÜR EIN ZWEISPURIGES FAHRZEUG**
STEER-BY-WIRE STEERING SYSTEM FOR A TWO-TRACK VEHICLE
SYSTÈME DE DIRECTION À ORIENTATION PAR CÂBLES POUR UN VÉHICULE À DEUX VOIES

(30) Priorität: 21.10.2020 DE 102020127661
(43) Veröffentlichungstag der Anmeldung: 27.04.2022
(73) Patentinhaber: Audi AG, 85045 Ingolstadt (DE)
(72) Erfinder: Minninger, Arne, 85055 Ingolstadt (DE)

(56) Entgegenhaltungen:
- DE-A1- 19 912 169
- DE-A1-102014 211 815
- DE-A1-102017 203 748

## Beschreibung

Die Erfindung betrifft eine Steer-by-wire-Lenksystem für ein zweispuriges Fahrzeug nach dem Oberbegriff des Patentanspruches 1 sowie ein Verfahren zum Betreiben eines Steer-by-wire-Lenksystems nach dem Patentanspruch 10.

Ein gattungsgemäßes Steer-by-wire-Lenksystem weist, ebenso wie ein konventionelles, elektromechanisches Lenksystem, eine Lenkrad und ein Lenkgetriebe auf. Im Gegensatz zu dem konventionellen Lenksystem ist bei dem Steer-by-wire-Lenksystem jedoch keine Lenksäule vorgesehen, so dass zwischen dem Lenkrad und dem Lenkgetriebe keine mechanische Verbindung besteht. Das Lenkrad und das Lenkgetriebe sind somit mechanisch voneinander entkoppelt und werden vollständig elektronisch über eine Kraft- und Wegansteuerung gesteuert. Für die elektronische Ansteuerung weist das Lenksystem einen Lenksensor und ein Steuergerät sowie einen Lenkgetriebe-Aktor zur Ansteuerung des Lenkgetriebes auf. Der Lenksensor erfasst den vom Fahrer gegebenen Lenkwunsch anhand einer Drehposition und/oder einer Drehbetätigung des Lenkrades und generiert daraus einen Lenkbefehl. In Abhängigkeit dieses Lenkbefehls steuert das Steuergerät den Lenkgetriebe-Aktor an, der mittels des Lenkgetriebes einen dem Lenkwunsch entsprechenden Fahrzeugrad-Lenkwinkel einstellt.

Um dem Fahrer haptische Rückmeldungen zu geben, ist zusätzlich ein elektromechanischer Hand-Aktor vorgesehen, der als Force-Feedback-Aktor wirkt und die haptischen Rückmeldungen an dem Lenkrad erzeugt. Die haptischen Rückmeldung sind eine Lenk-Rückmeldung, bei der das Lenkrad in Abhängigkeit der auftretenden Lenkkräfte mit einem Lenkgegenmoment beaufschlagt wird, und eine Fahrbahn-Rückmeldung, die mit einer auf das Fahrzeug einwirkenden, fahrbahnseitigen Störanregung korreliert.

Aufgrund der fehlenden mechanischen Verbindung zwischen dem Lenkrad und dem Lenkgetriebe, müssen Maßnahmen bereitgestellt werden, die auch bei einem Lenksystem-Fehlerfall in dem Steer-by-wire-Lenksystem eine Lenkfähigkeit gewährleisten. Dennoch sollte der Fahrer frühzeitig auf Störungen im Lenksystem oder anderer Komponenten hingewiesen werden. Hierfür ist zusätzlich neben der Lenk- und der Fahrbahn-Rückmeldung eine haptische Warn-Rückmeldung (zum Beispiel rotatorische Lenkradvibration) vorgesehen, die ebenfalls von dem Hand-Aktor an dem Lenkrad erzeugt wird und die den Fahrer auf das Vorliegen eines Lenksystem-Fehlerfalls hinweist. Nachteilig daran ist allerdings, dass sich die am Lenkrad erzeugten, haptischen Rückmeldungen gegenseitig überlagern und daher nicht gewährleistet ist, dass der Fahrer die Warn-Rückmeldung in allen Fahrzuständen, sicher wahrnimmt.

Aus der US 8,405,522 B2 ist ein Spurhaltehalteassistent mit haptischer Warnung bekannt, bei dem durch die Fahrbahn verursachte Vibrationen kompensiert werden.

Das Dokument DE19912169A1 offenbart ein System gemäß dem Oberbegriff des Anspruchs 1.

Die Aufgabe der Erfindung besteht darin, ein Steer-by-wire-Lenksystem für ein zweispuriges Fahrzeug sowie ein Verfahren zum Betrieben eines Steer-by-wire-Lenksystems mit gesteigerter Wahrnehmbarkeit der Warn-Rückmeldung für den Fahrer bereitzustellen.

Die Aufgabe ist durch die Merkmale des Anspruches 1 oder 10 gelöst. Bevorzugte Weiterbildungen der Erfindung sind in den Unteransprüchen offenbart.

Gemäß dem kennzeichnenden Teil des Anspruches 1 ist dem Steuergerät eine Auswerteeinheit zugeordnet, mittels der bei Vorliegen eines Lenksystem-Fehlerfalls die haptische Fahrbahn-Rückmeldung zumindest abschwächbar oder deaktivierbar ist, und zwar im Vergleich zu einem Lenksystem-Normalbetrieb ohne Lenksystem-Fehlerfall. Folglich kann der Fahrer die Warn-Rückmeldung einfacher wahrnehmen, da diese nicht durch die Fahrbahn-Rückmeldung verfälscht oder von dieser negativ beeinflusst wird. Dies hat den Vorteil, dass Fehler im Lenksystem vom Fahrer zuverlässig wahrgenommen werden und dadurch Unfälle vermieden werden können.

In einer konkreten Ausführungsform kann dem Steuergerät ein Lenk-Wandlerbaustein zugeordnet sein, der, insbesondere bei einem Lenkvorgang, ein Lenkgegenmoment-Signal generiert, mit dem der Hand-Aktor ansteuerbar ist, um an der Lenkhandhabe die Lenk-Rückmeldung zu erzeugen. Der Fahrer erhält somit auch ohne eine triebliche Verbindung zwischen der Lenkhandhabe und dem Lenkgetriebe eine Rückmeldung über auftretende Lenkkräfte, wie beispielsweise Rückstellkräfte. Der Fahrer kann somit, wie auch bei elektromechanischen Lenksystemen anhand der Lenk-Rückmeldung auf den momentanen Fahrzustand des Fahrzeuges schließen und beispielsweise ein Untersteuern erkennen. Somit ist die Fahrsicherheit in vorteilhafter Weise auch bei dem Steer-by-wire-Lenksystem gewährleistet.

Bevorzugt kann dem Steuergerät ein Fahrbahn-Wandlerbaustein zugeordnet sein, der auf der Grundlage der fahrbahnseitigen Störanregung ein Fahrbahn-Signal generiert, mit dem der Hand-Aktor ansteuerbar ist, um an der Lenkhandhabe die Fahrbahn-Rückmeldung zu erzeugen. Der Fahrer kann ausgehend von der Fahrbahn-Rückmeldung auf die Fahrbahneigenschaften rückschließen und beispielsweise erkennen, ob das Fahrzeug aktuell auf einer griffigen oder eher rutschigen Fahrbahn fährt. Dies hat den Vorteil, dass der Fahrer seine Fahrweise auf die Fahrbahneigenschaften anpassen kann, so dass die Fahrsicherheit weiter gesteigert ist.

Besonders bevorzugt kann dem Steuergerät ein Diagnose-Baustein zugeordnet sein, der bei Vorliegen eines Lenksystem-Fehlerfalls ein Warn-Signal generiert, mit dem der Hand-Aktor ansteuerbar ist, um an der Lenkhandhabe die Warn-Rückmeldung zu erzeugen. Dadurch, dass das Warn-Signal unmittelbar an der Lenkhandhabe erzeugt wird und der Fahrer während der Fahrt stets Kontakt mit der Lenkhandhabe hat, wird er auf den Lenksystem-Fehlerfall ablenkungsfrei aufmerksam. Die Fahrsicherheit ist somit noch weiter gesteigert. Alternativ oder zusätzlich kann mit dem Hand-Aktor auch eine Ausgabeeinheit ansteuerbar sein, um, insbesondere zusätzlich zu der Warn-Rückmeldung, eine akustische und/oder visuelle Warnmeldung an der Ausgabeeinheit zu erzeugen. Der Fahrer wird somit bei Vorliegen eines Lenksystem-Fehlerfalls über mehrere Kanäle (haptisch, visuell, akustisch) gewarnt, wodurch die Zuverlässigkeit gesteigert ist, mit der der Fahrer die Warn-Rückmeldung wahrnimmt.

In einer bevorzugten Ausführungsform kann mittels des Diagnose-Bausteins zur Erkennung eines Lenksystem-Fehlerfalls zumindest ein Lenksystem-Parameter, insbesondere eine Lenksystem-Betriebsspannungshöhe erfassbar und mit einem vordefinierten Lenksystem-Soll-Parameter, insbesondere einer Lenksystem-Soll-Betriebsspannungshöhe, vergleichbar sein, wobei insbesondere bei Überschreiten oder Unterschreiten des Lenksystem-Soll-Parameters das Warn-Signal mittels des Diagnose-Bausteins generierbar ist. Die Spannungsversorgung stellt bei einem Steer-by-wire-Lenksystem einen kritischen Lenksystem-Parameter dar, da bei zu geringer Betriebsspannung das Steer-by-wire-Lenksystem nicht mehr funktioniert und das Fahrzeug folglich nicht mehr lenkbar ist. Die Überwachung der Spannungsversorgung hat daher den Vorteil, dass Unfälle vermieden werden können, die ansonsten auf fehlende Lenkbarkeit zurückzuführen wären.

In einer besonders bevorzugten Ausführungsform können sich die an der Lenkhandhabe bereitstellbaren haptischen Rückmeldungen einander teilweise überlagern.

Bevorzugt kann die haptische Warn-Rückmeldung eine Lenkhandhabe-Vibration sein. Dies hat den Vorteil, dass der Fahrer unterschwellig aber trotzdem zuverlässig auf die Warn-Rückmeldung aufmerksam gemacht wird, ohne dass die Gefahr besteht, dass der Fahrer in kritischen Fahrsituationen aufgrund der Warn-Rückmeldung abgelenkt wird oder gar erschrickt.

Besonders bevorzugt kann in dem Signalpfad vom Fahrbahn-Wandlerbaustein zum Hand-Aktor eine von der Auswerteeinheit ansteuerbare Signalbearbeitungseinheit zwischengeschaltet sein, wobei bei Vorliegen eines Lenksystem-Fehlerfalls die Signalbearbeitungseinheit mittels der Auswerteeinheit aktivierbar ist, so dass eine Signalübertragung des Fahrbahn-Signals zum Hand-Aktor gesperrt ist oder in der Signalbearbeitungseinheit ein modifiziertes Fahrbahn-Signal erzeugbar ist, mittels dem die Lenkhandhabe mit einer abgeschwächten Fahrbahn-Rückmeldung beaufschlagbar ist. Die Fahrbahn-Rückmeldung wird somit in ihrer Intensität abgeschwächt oder komplett abgeschaltet. Folglich wird die Warn-Rückmeldung nicht mehr von der Fahrbahn-Rückmeldung gestört oder überlagert. Dies hat den Vorteil, dass für den Fahrer unmissverständlich erkennbar ist, ob eine Warn-Rückmeldung vorliegt, die sein Eingreifen erfordert.

In einer konkreten Ausführungsform kann die abgeschwächte Fahrbahn-Rückmeldung eine im Vergleich zu der Fahrbahn-Rückmeldung im Lenksystem-Normalbetrieb verringerte Amplitudenhöhe und/oder eine verringerte Frequenz aufweisen.

Der Begriff Warn-Rückmeldung ist breit zu verstehen, so dass eine Warn-Rückmeldung auch ausgegeben werden kann, selbst wenn kein Fehlerfall im Lenksystem vorliegt und der Fahrer stattdessen mittels der Warn-Rückmeldung beispielsweise über einen speziellen Betriebs- oder Fahrzustand des Fahrzeuges informiert werden soll.

Nachfolgend ist ein Ausführungsbeispiel der Erfindung anhand der Figuren beschrieben.

Es zeigen:
- Fig. 1: in einer schematischen Skizze ein Steer-by-wire-Lenksystem in einem zweispurigen Fahrzeug;
- Fig. 2: in einem schematischen Blockschaltdiagramm die Funktionsweise des Steer-by-wire-Lenksystems der Fig.1, und
- Fig. 3: in einem schematischen Blockschaltdiagramm die Funktionsweise eines Steer-by-wire-Lenksystems gemäß dem Stand der Technik.

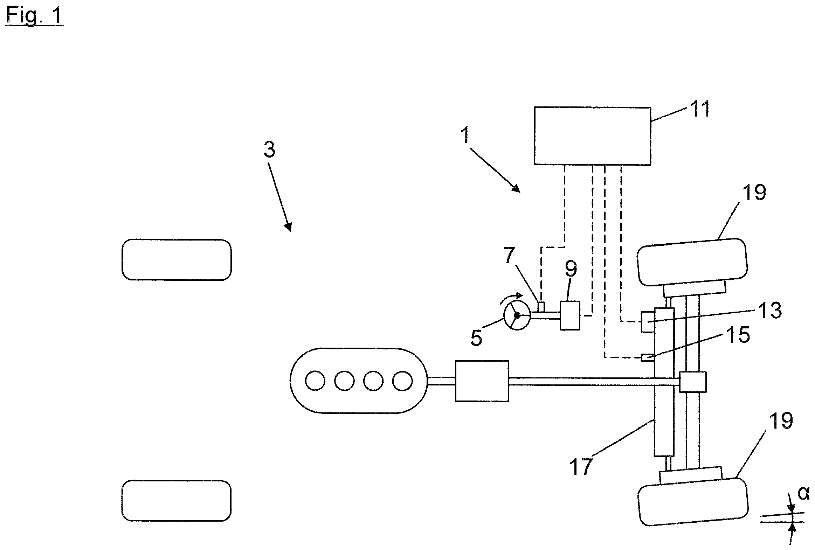

In der Fig. 1 ist der Aufbau eines in einem zweispurigen Fahrzeug 3 vorgesehenen Steer-by-wire-Lenksystems 1 dargestellt. Das Steer-by-wire-Lenksystem 1 weist als Lenkhandhabe ein Lenkrad 5 auf, dem ein Lenksensor 7 und ein Hand-Aktor 9 zugeordnet sind. Der Lenksensor 7 und der Hand-Aktor 9 sind unter Zwischenschaltung eines Steuergerätes 11 in Signalverbindung mit einem Lenkgetriebe-Aktor 13 und einer Lenkgetriebe-Sensorik 15, die einem Lenkgetriebe 17 zugeordnet sind, das mit den Vorderrädern 19 des Fahrzeuges 3 trieblich verbunden ist.

Zur Durchführung eines Lenkvorganges erfasst der Lenksensor 7 eine Drehposition oder eine Drehbewegung des Lenkrades 5 und generiert daraus einen Lenkbefehl, der an das Steuergerät 11 übermittelt wird. In Abhängigkeit des Lenkbefehls steuert das Steuergerät 11 den Lenkgetriebe-Aktor 13, woraufhin mittels des Lenkgetriebes 17 ein Fahrzeugrad-Lenkwinkel α an den Vorderrädern 19 eingestellt wird.

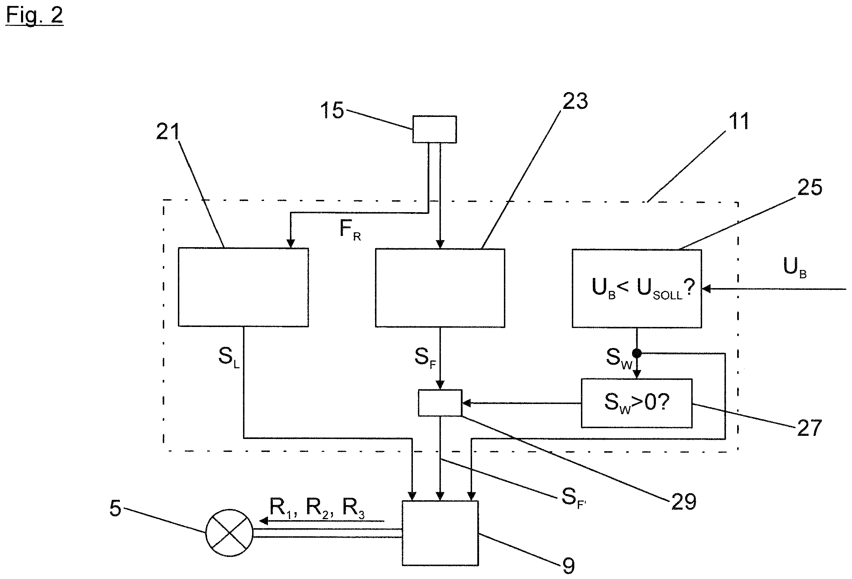

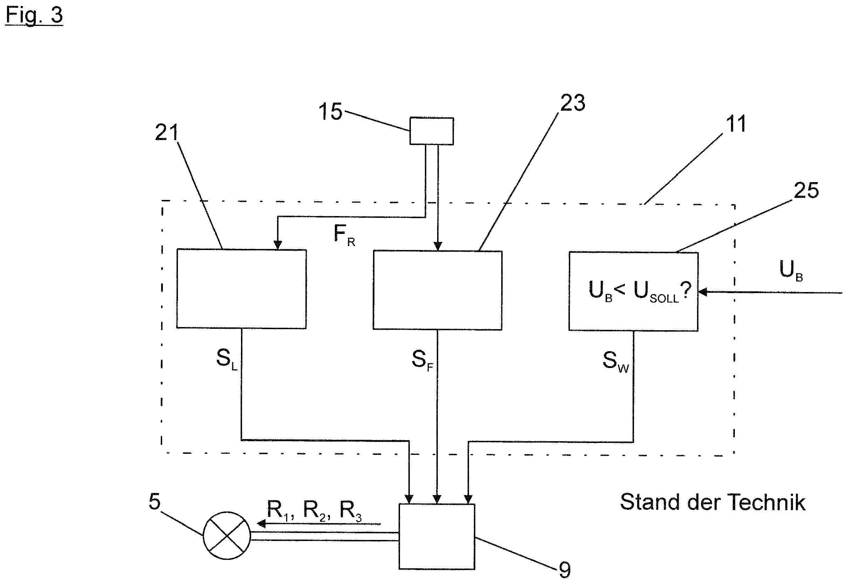

Um dem Fahrer eine Rückmeldung über einwirkende Lenkkräfte, fahrbahnseitige Störanregungen, oder den Zustand des Steer-by-wire-Lenksystems 1 zu geben, steuert das Steuergerät 11 den als Force-Feedback-Einheit wirkenden Hand-Aktor 9 an, der daraufhin an dem Lenkrad 5 entsprechende, haptische Rückmeldungen erzeugt. Die Ansteuerung des Hand-Aktors 9 durch das Steuergerät 11 sowie dessen Aufbau ist nachfolgend anhand der Fig. 2 und 3 dargelegt, wobei zunächst auf die Fig. 3 eingegangen wird, die das Steuergerät 11 gemäß dem Stand der Technik zeigt.

Dem Steuergerät 11 der Fig. 3 sind ein Lenk-Wandlerbaustein 21, ein Fahrbahn-Wandlerbaustein 23 und ein Diagnose-Baustein 25 zugeordnet, die jeweils in Signalverbindung mit dem Hand-Aktor 9 sind.

Mittels der Lenkgetriebe-Sensorik 15 wird eine auf die Vorderräder 19 einwirkende Rückstellkraft F_{R} als Beispiel für einen Lenk-Parameter sensorisch erfasst und an den Lenk-Wandlerbaustein 21 übermittelt. Der Lenk-Wandlerbaustein 21 generiert in Abhängigkeit der Rückstellkraft ein Lenkgegenmoment-Signal S_{L} mit dem der Hand-Aktor 9 angesteuert wird, um das Lenkrad 5 mit einer Lenk-Rückmeldung R1 in Form eines Lenkgegenmomentes zu beaufschlagen.

Durch die Lenkgetriebe-Sensorik 15 werden auf die Vorderräder 19 einwirkende, fahrbahnseitige Störanregungen erfasst und an den Fahrbahn-Wandlerbaustein 23 übermittelt. Der Fahrbahn-Wandlerbaustein 23 generiert auf Grundlage der Störanregungen ein Fahrbahn-Signal S_{F} mit dem der Hand-Aktor 9 angesteuert wird, um an dem Lenkrad 5 eine mit den Störanregungen korrelierende, haptische Fahrbahn-Rückmeldung R2 zu erzeugen.

Der Diagnose-Baustein 25 ermittelt, ob in dem Lenksystem 1 ein Lenksystem-Fehlerfall vorliegt. Hierzu wird mittels einer Diagnose-Sensorik (nicht dargestellt) als Lenksystem-Parameter die Lenksystem-Betriebsspannungshöhe U_{B} erfasst und an den Diagnose-Baustein 25 übermittelt. Der Diagnose-Baustein 25 vergleicht die Lenksystem-Betriebsspannungshöhe U_{B} mit einer vordefinierten Lenksystem-Soll-Betriebsspannungshöhe U_{SOLL} und generiert ein Warn-Signal Sw, sofern ein Lenksystem-Fehlerfall vorliegt, bei dem die Lenksystem-Betriebsspannungshöhe U_{B} die Lenksystem-Soll-Betriebsspannungshöhe U_{SOLL} unterschreitet. Das Warn-Signal Sw wird an den Hand-Aktor 9 ausgegeben, der ausgehend von dem Warn-Signal Sw an dem Lenkrad 5 die Warn-Rückmeldung R3 in Form einer Lenkrad-Vibration erzeugt.

Die Lenk-Rückmeldung R1, die Fahrbahn-Rückmeldung R2 und die Warn-Rückmeldung R3 überlagern sich jedoch teilweise, so dass davon auszugehen ist, dass der Fahrer die Warn-Rückmeldung R3 nicht in jedem Fahrzustand zuverlässig wahrnimmt.

In Abkehr vom Stand der Technik und damit vom Steuergerät 11 der Fig. 3 sind dem Steuergerät 11 der Fig. 2 daher zusätzlich eine Auswerteeinheit 27 und eine Signalbearbeitungseinheit 29 zugeordnet, mittels derer die Fahrbahn-Rückmeldung R2 bei Vorliegen eines Lenksystem-Fehlerfalls abschwächbar oder deaktivierbar ist. Durch das Deaktivieren der Fahrbahn-Rückmeldung R2 oder durch die, im Vergleich zu einem Lenksystem-Normalbetrieb ohne Lenksystem-Fehlerfall, Abschwächung der Fahrbahn-Rückmeldung R2 kommt es zu keiner oder einer nurmehr geringfügigen Überlagerung zwischen der Fahrbahn-Rückmeldung R2 und der Warn-Rückmeldung R3, so dass die Wahrnehmbarkeit der Warn-Rückmeldung R3 gesteigert ist.

Die Auswerteeinheit 27 ist signaleingangsseitig mit dem Diagnose-Baustein 25 und signalausgangsseitig mit der Signalbearbeitungseinheit 29 in Signalverbindung. Die Signalbearbeitungseinheit 29 ist in einen Signalpfad zwischen dem Fahrbahn-Wandlerbaustein 23 und dem Hand-Aktor 9 eingebunden und zwischen dem Fahrbahn-Wandlerbaustein 23 und dem Hand-Aktor zwischengeschaltet. Bei Vorliegen eines Lenksystem-Fehlerfalls, das heißt bei Übermittlung des Warn-Signals Sw an die Auswerteeinheit 27, wird die Signalbearbeitungseinheit 29 von der Auswerteeinheit 27 derart aktiviert, dass in der Signalbearbeitungseinheit 29 die Signalübertragung des Fahrbahn-Signals S_{F} gesperrt wird oder stattdessen ein modifiziertes Fahrbahn-Signal S_{F'} erzeugt wird, mittels dem das Lenkrad 5 mit einer abgeschwächten Fahrbahn-Rückmeldung R2 beaufschlagt wird. Die abgeschwächte Fahrbahn-Rückmeldung R2 weist eine im Vergleich zu der Fahrbahn-Rückmeldung R2 im Lenksystem-Normalbetrieb eine verringerte Amplitudenhöhe und eine verringerte Frequenz auf.

### BEZUGSZEICHENLISTE:

- 1: Steer-by-wire-Lenksystem
- 3: Fahrzeug
- 5: Lenkrad
- 7: Lenksensor
- 9: Hand-Aktor
- 11: Steuergerät
- 13: Lenkgetriebe-Aktor
- 15: Lenkgetriebe-Sensorik
- 17: Lenkgetriebe
- 19: Vorderrad
- 21: Lenk-Wandlerbaustein
- 23: Fahrbahn-Wandlerbaustein
- 25: Diagnose-Baustein
- 27: Auswerteeinheit
- 29: Signalbearbeitungseinheit
- F_{R}: Rückstellkraft
- S_{F}: Fahrbahn-Signal
- S_{F'}: modifiziertes Fahrbahn-Signal
- S_{L}: Lenkgegenmoment-Signal
- Sw: Warn-Signal
- R1: Lenk-Rückmeldung
- R2: Fahrbahn-Rückmeldung
- R3: Warn-Rückmeldung
- U_{B}: Lenksystem-Betriebsspannungshöhe
- U_{SOLL}: Lenksystem-Soll-Betriebsspannungshöhe
- α: Fahrzeugrad-Lenkwinkel

## Patentansprüche

1. Steer-by-wire-Lenksystem für ein Fahrzeug, mit einer Lenkhandhabe (5), mit einem von der Lenkhandhabe (5) mechanisch entkoppelten Lenkgetriebe-Aktor (13), mit einem Lenksensor (7), der eine Drehposition und/oder eine Drehbewegung der Lenkhandhabe (5) als einen Lenkbefehl erfasst, mit einem elektronischen Steuergerät (11), das in Abhängigkeit vom erfassten Lenkbefehl den Lenkgetriebe-Aktor (13) zur Einstellung eines Fahrzeugrad-Lenkwinkels (α) ansteuert, und mit einem vom Steuergerät (11) ansteuerbaren Hand-Aktor (9), der an der Lenkhandhabe (5) haptische Rückmeldungen (R1, R2, R3) für den Fahrer erzeugt, und zwar eine haptische Lenk-Rückmeldung (R1), bei der die Lenkhandhabe (5), insbesondere in einem Lenkvorgang, mit einem Lenkgegenmoment beaufschlagt ist, eine Fahrbahn-Rückmeldung (R2), die mit einer auf das Fahrzeug (3) einwirkenden, fahrbahnseitigen Störanregung korreliert, und eine Warn-Rückmeldung (R3), die den Fahrer auf einen Fehlerfall im Steer-by-wire-Lenksystem (1) hinweist, **dadurch gekennzeichnet, dass** dem Steuergerät (11) eine Auswerteeinheit (27) zugeordnet ist, mittels der bei Vorliegen eines Lenksystem-Fehlerfalls die haptische Fahrbahn-Rückmeldung (R2) zumindest abschwächbar oder deaktivierbar ist, und zwar im Vergleich zu einem Lenksystem-Normalbetrieb ohne Lenksystem-Fehlerfall, so dass für den Fahrer die Wahrnehmbarkeit der Warn-Rückmeldung (R3) gesteigert ist.

2. Steer-by-wire-Lenksystem nach Anspruch 1, **dadurch gekennzeichnet, dass** dem Steuergerät (11) ein Lenk-Wandlerbaustein (21) zugeordnet ist, der, insbesondere bei einem Lenkvorgang, ein Lenkgegenmoment-Signal (S_{L}) generiert, mit dem der Hand-Aktor (9) ansteuerbar ist, um an der Lenkhandhabe (5) die Lenk-Rückmeldung (R1) zu erzeugen.

3. Steer-by-wire-Lenksystem nach Anspruch 1 oder 2, **dadurch gekennzeichnet, dass** dem Steuergerät (11) ein Fahrbahn-Wandlerbaustein (23) zugeordnet ist, der auf der Grundlage der fahrbahnseitigen Störanregung ein Fahrbahn-Signal (S_{F}) generiert, mit dem der Hand-Aktor (9) ansteuerbar ist, um an der Lenkhandhabe (5) die Fahrbahn-Rückmeldung (R2) zu erzeugen.

4. Steer-by-wire-Lenksystem nach einem der Ansprüche 1, 2 oder 3, **dadurch gekennzeichnet, dass** dem Steuergerät (11) ein Diagnose-Baustein (25) zugeordnet ist, der bei Vorliegen eines Lenksystem-Fehlerfalls ein Warn-Signal (Sw) generiert, mit dem der Hand-Aktor (9) ansteuerbar ist, um an der Lenkhandhabe (5) die Warn-Rückmeldung (R3) zu erzeugen und/oder mit dem eine Ausgabeeinheit ansteuerbar ist, um, insbesondere zusätzlich zu der Warn-Rückmeldung (R3), eine akustische und/oder visuelle Warnmeldung an der Ausgabeeinheit zu erzeugen.

5. Steer-by-wire-Lenksystem nach Anspruch 4, **dadurch gekennzeichnet, dass** mittels des Diagnose-Bausteins (25) zur Erkennung eines Lenksystem-Fehlerfalls zumindest ein Lenksystem-Parameter, insbesondere eine Lenksystem-Betriebsspannungshöhe (U_{B}) erfassbar und mit einem vordefinierten Lenksystem-Soll-Parameter, insbesondere einer Lenksystem-Soll-Betriebsspannungshöhe (U_{SOLL}), vergleichbar ist, und dass insbesondere bei Überschreiten oder Unterschreiten des Lenksystem-Soll-Parameters das Warn-Signal (S_{W}) mittels des Diagnose-Bausteins (25) generierbar ist.

6. Steer-by-wire-Lenksystem nach einem der vorhergehenden Ansprüche, **dadurch gekennzeichnet, dass** die an der Lenkhandhabe (5) bereitstellbaren haptischen Rückmeldungen (R1, R2, R3) einander teilweise überlagerbar sind.

7. Steer-by-wire-Lenksystem nach einem der vorhergehenden Ansprüche, **dadurch gekennzeichnet, dass** die haptische Warn-Rückmeldung (R3) eine Lenkhandhabe-Vibration ist.

8. Steer-by-wire-Lenksystem nach einem der vorhergehenden Ansprüche, **dadurch gekennzeichnet, dass** in dem Signalpfad vom Fahrbahn-Wandlerbaustein (23) zum Hand-Aktor (9) eine von der Auswerteeinheit (27) ansteuerbare Signalbearbeitungseinheit (29) zwischengeschaltet ist, und dass bei Vorliegen eines Lenksystem-Fehlerfalls die Signalbearbeitungseinheit (29) mittels der Auswerteeinheit (27) aktivierbar ist, so dass eine Signalübertragung des Fahrbahn-Signals (S_{F}) zum Hand-Aktor (9) gesperrt ist oder in der Signalbearbeitungseinheit (29) ein modifiziertes Fahrbahn-Signal (S_{F}') erzeugbar ist, mittels dem die Lenkhandhabe (5) mit einer abgeschwächten Fahrbahn-Rückmeldung (R2) beaufschlagbar ist.

9. Steer-by-wire-Lenksystem nach einem der vorhergehenden Ansprüche, **dadurch gekennzeichnet, dass** die abgeschwächte Fahrbahn-Rückmeldung (R2) eine im Vergleich zu der Fahrbahn-Rückmeldung (R2) im Lenksystem-Normalbetrieb verringerte Amplitudenhöhe und/oder eine verringerte Frequenz aufweist.

10. Verfahren zum Betreiben eines Steer-by-wire-Lenksystems nach einem der vorhergehenden Ansprüche.

## Claims

1. Steer-by-wire steering system for a vehicle, having a steering wheel (5), having a steering gear actuator (13) mechanically decoupled from the steering wheel (5), having a steering sensor (7) which detects a turn position and/or a term movement of the steering wheel (5) as a steering command, having an electronic control device (11) which, as a function of the detected steering command, controls the steering gear actuator (13) in order to set a vehicle wheel steering angle (α), and having a manual actuator (9) which can be controlled by the control device (11) which generates for the driver on the steering wheel (5) items of haptic feedback (R1, R2, R3) in the form of a steering feedback (R1), in which a steering counter moment is applied to the steering wheel (5), particularly during a steering procedure, a road feedback (R2), which correlates with an interference exercitation on the road acting on the vehicle (3), and a warning feedback (R3) which draws the attention of the driver to an error in the steer-by-wire steering system (1), **characterised in that** the control device (11) is assigned an evaluation unit (27) by means of which, in the case of the presence of a steering system error, the haptic road feedback (R2) can be at least weakened or deactivated in comparison with a steering system normal operation without steering system error, such that the driver's ability to perceive the warning feedback (R3) is heightened.

2. Steer-by-wire steering system according to claim 1, **characterised in that** the control device (11) is assigned a steering convertor module (21) which generates a steering counter moment signal (S_{L}) particularly during a steering procedure, with which the manual actuator (9) can be controlled in order to generate the steering feedback (R1) at the steering wheel (5).

3. Steer-by-wire steering system according to claim 1 or 2, **characterised in that** the control device (11) is assigned a road converter module (23) which generates on the basis of the interference excitation on the road a road signal (S_{F}) with which the manual actuator (9) can be controlled in order to generate the road feedback (R2) at the steering wheel (5).

4. Steer-by-wire steering system according to any of claims 1, 2 or 3, **characterised in that** the control device (11) is assigned a diagnosis module (25) which, in the presence of a steering system error, generates a warning signal (S_{W}) with which the manual actuator (9) is controlled in order to generate the warning feedback (R3) at the steering handle (5) and/or with which the output unit in order to generate, in particular in addition to the warning feedback (R3), an acoustic and/or visual warning alert at the output unit.

5. Steer-by-wire steering system according to claim 4, **characterised in that** by means of the diagnosis module (25) for recognising a steering system error at least one steering system parameter, in particular a steering system operating voltage level (U_{B}) can be detected and compared with a predefined steering system target parameter, in particular a steering system target operating voltage level (U_{SOLL}), and that in particular when the steering system target parameter is exceeded or undershot the warning signal (S_{W}) can be generated by means of the diagnosis module (25).

6. Steer-by-wire steering system according to any of the preceding claims, **characterised in that** the items of haptic feedback (R1, R2, R3) which can be provided at the steering wheel (5) can be partially superimposed on one another.

7. Steer-by-wire steering system according to any of the preceding claims, **characterised in that** the haptic warning feedback (R3) is a steering wheel vibration.

8. Steer-by-wire steering system according to any of the preceding claims, **characterised in that** a signal processing unit (29) which can be controlled by the evaluation unit (27) is interposed in the signal path from the road convertor module (23) to the manual actuator (9), and that in the presence of a steering system error, the signal processing unit (29) can be activated by means of the evaluation unit (27), such that a signal transmission of the road signal (S_{F}) to the manual actuator (9) is blocked or a modified road signal (S_{F}') can be generated in the signal processing unit (29) by means of which a weakened road feedback (R2) can be applied to the steering wheel (5).

9. Steer-by-wire steering system according to any of the preceding claims, **characterised in that** the weakened road feedback (R2) has an amplitude height which is reduced in comparison to the road feedback (R2) in normal operation of the steering system, and/or a reduced frequency.

10. Method for operating a steer-by-wire steering system according to any of the preceding claims.

## Revendications

1. Système de direction par câble pour un véhicule, avec une poignée de direction (5), avec un actionneur de mécanisme de direction (13) mécaniquement découplé de la poignée de direction (5), avec un capteur de direction (7), qui détecte une position de rotation et /ou un mouvement de rotation de la poignée de direction (5) en tant que commande de direction, avec un dispositif de commande électronique (11) qui, en fonction de la commande de direction détectée, commande l'actionneur de mécanisme de direction (13) pour régler un angle de braquage des roues du véhicule (α), et avec un actionneur manuel (9) pouvant être commandé par le dispositif de commande (11), qui produit des retours haptiques (R1, R2, R3) pour le conducteur sur la poignée de direction (5), à savoir un retour haptique de direction (R1), lors duquel la poignée de direction (5), en particulier lors d'une opération de direction, est soumise à un contre-couple de direction, un retour de voie (R2) qui est corrélé à une excitation de perturbation sur la voie affectant le véhicule (3), et un retour d'avertissement (R3) qui avertit le conducteur d'une erreur dans le système de direction par câble (1), **caractérisé en ce qu'**une unité d'évaluation (27) est associée au dispositif de commande (11), au moyen de laquelle le retour haptique de voie (R2) peut être au moins affaibli ou désactivé en présence d'une erreur du système de direction, à savoir par rapport à un fonctionnement normal du système de direction sans erreur du système de direction, de sorte que la perception du retour d'avertissement (R3) pour le conducteur est augmentée.

2. Système de direction par câble selon la revendication 1, **caractérisé en ce que** le dispositif de commande (11) est associé à un module convertisseur de direction (21) qui, en particulier lors d'une opération de direction, génère un signal de contre-couple de direction (S_{L}) avec lequel l'actionneur manuel (9) peut être commandé pour produire le retour de direction (R1) sur la poignée de direction (5).

3. Système de direction par câble selon la revendication 1 ou 2, **caractérisé en ce que** le dispositif de commande (11) est associé à un module convertisseur de voie (23) qui génère un signal de voie (S_{F}) sur la base de l'excitation de perturbation sur la voie, avec lequel l'actionneur manuel (9) peut être commandé pour produire le retour de voie (R2) sur la poignée de direction (5).

4. Système de direction par câble selon l'une quelconque des revendications 1, 2 ou 3, **caractérisé en ce qu'**un module de diagnostic (25) est associé au dispositif de commande (11), qui génère un signal d'avertissement (S_{W}) en cas d'erreur du système de direction, avec lequel l'actionneur manuel (9) peut être commandé pour produire le retour d'avertissement (R3) sur la poignée de direction (5) et/ou avec lequel une unité de sortie peut être commandée, en particulier pour produire en plus du retour d'avertissement (R3) un message d'avertissement sonore et/ou visuel sur l'unité de sortie.

5. Système de direction par câble selon la revendication 4, **caractérisé en ce qu'**au moins un paramètre de système de direction, en particulier un niveau de tension de service de système de direction (U_{B}), peut être détecté au moyen du module de diagnostic (25) pour détecter une erreur du système de direction et est comparable à un paramètre nominal de système de direction prédéfini, en particulier un niveau de tension de service nominal de système de direction (U_{SOLL}), et **en ce que** le signal d'avertissement (S_{W}) peut être généré au moyen du module de diagnostic (25) en particulier lorsque le paramètre nominal de système de direction est dépassé ou n'est pas atteint.

6. Système de direction par câble selon l'une quelconque des revendications précédentes, **caractérisé en ce que** les retours haptiques (R1, R2, R3) prévisibles sur la poignée de direction (5) peuvent être partiellement superposés.

7. Système de direction par câble selon l'une quelconque des revendications précédentes, **caractérisé en ce que** le retour haptique d'avertissement (R3) est une vibration de la poignée de direction.

8. Système de direction par câble selon l'une quelconque des revendications précédentes, **caractérisé en ce qu'**une unité de traitement de signal (29) qui peut être commandée par l'unité d'évaluation (27) est interposée dans le trajet de signal du module convertisseur de voie (23) à l'actionneur manuel (9), et **en ce qu'**en cas d'erreur du système de direction, l'unité de traitement de signal (29) peut être activée au moyen de l'unité d'évaluation (27), de sorte qu'une transmission de signal du signal de voie (S_{F}) à l'actionneur manuel (9) est bloquée ou qu'un signal de voie modifié (S_{F}') peut être produit dans l'unité de traitement de signal (29), au moyen duquel la poignée de direction (5) peut être actionnée avec un retour de voie affaibli (R2).

9. Système de direction par câble selon l'une quelconque des revendications précédentes, **caractérisé en ce que** le retour de voie affaibli (R2) présente un niveau d'amplitude réduit et/ou une fréquence réduite par rapport au retour de voie (R2) en fonctionnement normal du système de direction.

10. Procédé de fonctionnement d'un système de direction par câble selon l'une quelconque des revendications précédentes.
